# EUROPEAN PATENT APPLICATION

(11) **EP 0 821 324 A2**
(43) Date of publication of application: **28.01.1998**
(21) Application number: 97111727.0
(22) Date of filing: 10.07.1997
(51) Int. Cl.: G06T 15/10

(54) **Cache memory for Z-buffer**

(30) Priority: 26.07.1996 EP 96112095
(71) Applicant: International Business Machines Corporation, Armonk, N.Y. 10504 (US)
(72) Inventor: Haas, Jürgen, 72127 Kusterdingen (DE); Schneider, Bengt-Olaf, Ossining, New York 10562 (US); Narayanaswami, Chandra, Valhalla, New York 10595 (US)
(74) Representative: Teufel, Fritz, Dipl.-Phys.

(57) **Abstract**

The invention pertains to computer graphics systems providing three-dimensional pixel oriented images. Proposed is an efficient application of the Z-Buffer algorithm for visible surface determination in 3D graphics hardware.

The Z-Buffer algorithm is improved by a method of caching depth information which can be implemented in hardware by a specific depth cache memory (Z-Cache). Hereby the Z-Buffer access is speeded-up by burst read and write of depth values from the Z-Buffer to the Z-Cache and vice versa. Further the overall execution time of the Z-Buffer algorithm is significantly improved with respect to the implementation of a one cycle read/compare/write operation to Z-values in case of a cache "hit".

## Description

The invention relates to computer graphics systems providing three-dimensional pixel oriented images, and more particularly to an efficient application of the Z-Buffer algorithm for visible surface determination in 3D graphics hardware. It is hereby pertained to the area of 3D graphics hardware accelerators particularly in the PC/low-end workstation arena.

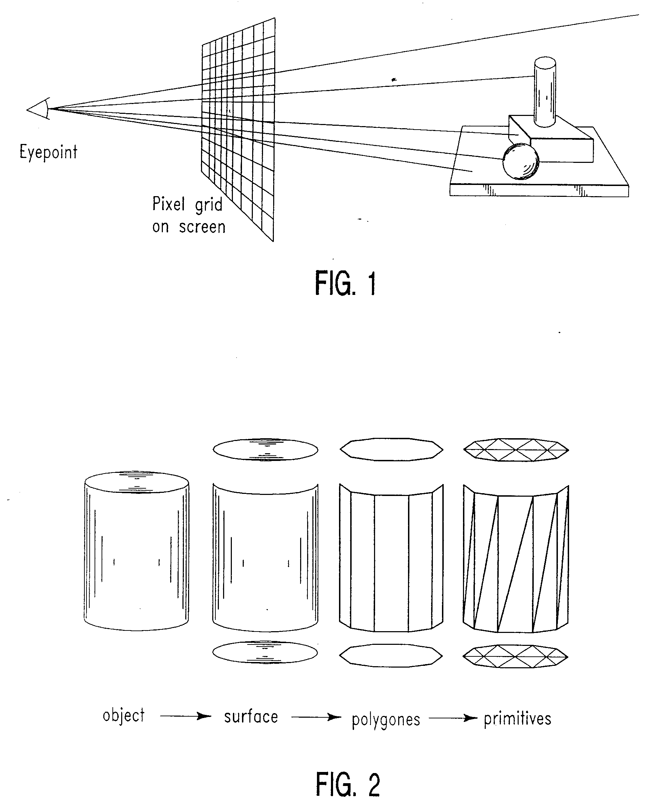

A common representation of 3-dimensional (3D) objects in computer graphics applications is an approximation of their surface by a sufficiently large number of polygons, mostly triangles. Graphical output devices nowadays are almost exclusively raster devices, that is, the display area is comprised of a set of discrete pixels (Fig. 1 and 2). Each pixel is on the screen is associated with one entry in a display buffer ("frame buffer") which holds the color of each pixel. For display purposes, each triangle must therefore be decomposed into a set of screen pixels it covers, a process called "rasterization" which usually is implemented in a specific rasterizer chip.

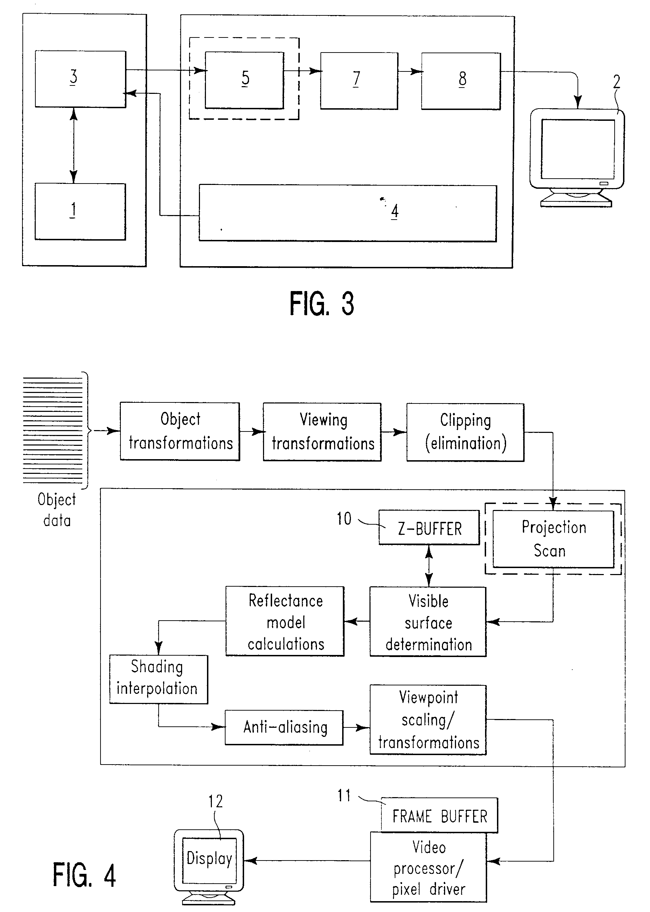

Fig. 3 gives an overview of the common graphics hardware. An application program 1 wants to display a 3D graphic object on a conventional two-dimensional (2D) display 2. The respective 3D data are stored in a database 3.

A processing unit 4 is provided to handle 3D data input to the database 3 and to control a geometric graphics unit 5 which is responsible for geometric object transformations like scalling, moving or rotation of the objects, and a rasterizer 7 for decomposing each primitive (e.g. triangles) into screen pixels and a rasterizer 7 for decomposing each primitive (e.g. triangles) into screen pixels.

A pixel driver 8 which is also connected to the processing unit controls a display for 2D presentation of the 3D graphics.

The determination of the visible parts of an object can be solved by computing for each pixel a measure for the distance to the observer, called Depth Value or "Z-Value", and by comparing that value to the Z-Value of the pixel previously generated for this screen address. There exist several algorithms for handling visible surface determination within 3D graphics. The most common algorithms are pre-sorting of objects/polygons according to the depth before rasterization, or use of a depth buffer algorithm.

The basic idea of a depth sort algorithm developed by Newell and Sancha (Newel, M.E.,R.G. Newell, and T.L Sancha, "A solution to the Hidden Surface Problem", in Proceedings of the ACM National Conference 1972, 433-450) is to paint the polygons into a frame buffer in order of decreasing distance from the viewpoint. Three conceptual steps are hereby performed:
1. Sorting all polygons according to the smallest (farthest) Z coordinate of each;
2. resolving any ambiguities which may cause when polygons's Z extends overlap, and splitting polygons if necessary;
3. scan-converting each polygon in ascending order of smallest Z coordinate, i.e. back to the front.

Pre-sorting of polygons is applicable only for smaller scenes with a relatively small number of objects because of the sorting and polygon-splitting performance which have to be done by the CPU. Thus, this algorithm is not applicable for applications working with more complex 3D scenes.

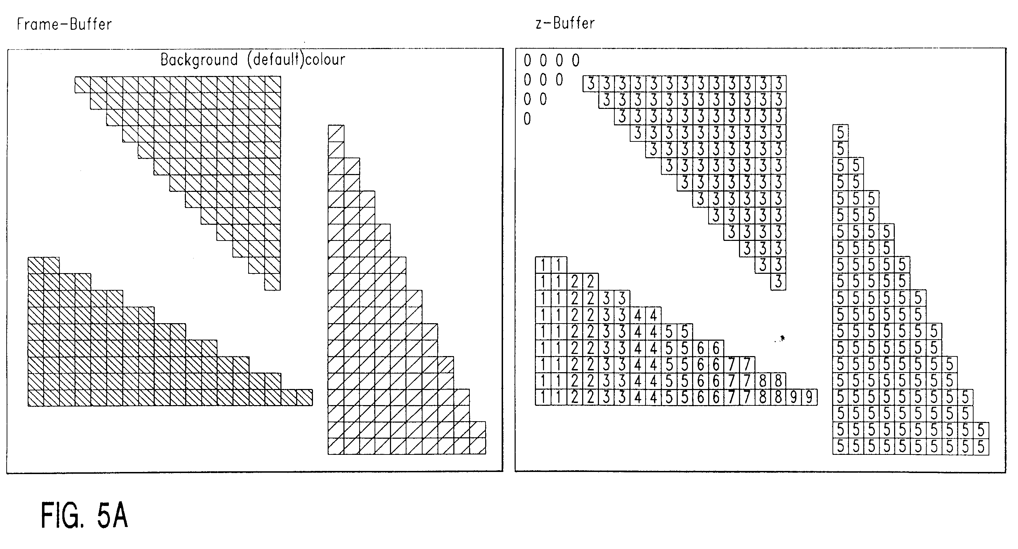

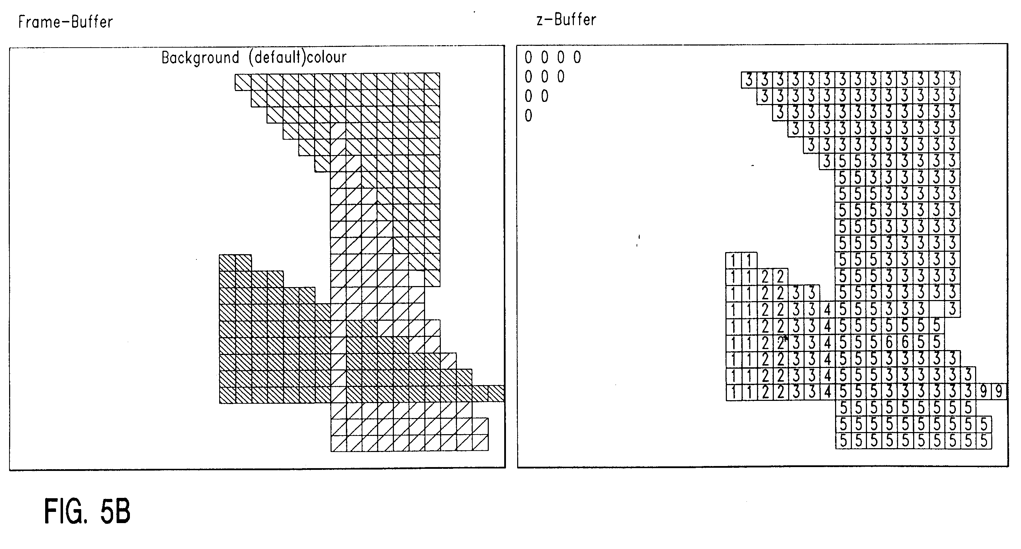

The depth-buffer algorithm developed by E. Catmull, disclosed in an article entitled "A Subdivision Algorithm for Computer Display of Curved Surfaces" and published in Ph.D.-Thesis, Computer Science Department, University of Utah, in December 1974, is commonly implemented in most kinds of 3D graphics hardware accelerators. It requires not only a frame buffer in which colour values are stored, but also a Z-Buffer, with the same number of entries, in which a Z-Value (depth value) is stored for each pixel of the scene (Fig. 5a). The Z-Buffer is initialized to zero, representing the Z-value at the back clipping plane and the frame buffer is initialized to the background colour. The largest value that can be stored in the Z-Buffer represents the Z-Value (or depth) of the front clipping plane. The advantage of this algorithm is that polygons which belong to any object, independent of their depth, can be rendered in arbitrary order. During the scan conversion process, if the polygon point being scan converted at (X, Y) is no farther from the viewer then is the point whose colour and depth are currently in the frame buffer and the Z-Buffer, respectively, then the new points colour and depth replace the old values (Fig. 5b).

Prior art implementations have a dedicated Z-Buffer integrated in DRAM memory hardware. The hardware rasterizer require thus at least one access to the Z-Buffer, one compare of the old and the new depth value, and in around 50 % of the pixels also a write access to the external Z-Buffer. All the operations and accesses have to be done at pixel frequency. Limiting factors for Z-Buffer algorithm is the access time to the dedicated DRAM Z-Buffer, overall bandwidth requirements during Z-Buffer access and also cost an board space for the dedicated Z-Buffer memory which becomes more and more a factor while 3D graphics is moving also to personal computer (PC) platforms.

A first approach method of generating in the form of an array of picture elements (pixels) a two-dimensional image representing a three-dimensional scene is described for example in US-P-4 475 104. That method implements a so-called "depth buffer" or "Z-Buffer" hidden surface removal (HSR) at the time of scan convertion to ensure that the image of an object in the scene which has already been converted is not overwritten by input pixel data which arrives later but in fact corresponds to an object behind the one already stored. In the depth-buffer algorithm the stored foreground colour is only overwritten if the input depth is less than the stored foreground depth. The input depth is then stored as a new foreground depth.

The depth-buffer algorithm is described more generally in "Principles of Interactive Computer Graphics" by W.M. Newman and R.F. Sproull on page 369, and has the advantage of simplicity and of not requiring knowledge of any object other than that being scan-converted at the time. The large memory required for the depth-buffer is becoming a less significant disadvantage as semiconductor memory increases in density and decreases in cost.

Fig. 4 is a block diagram showing an entire structure of a conventional three-dimensional graphic display apparatus. A line generator generates X-, Y-, and Z-coordinate data in a three-dimensional coordinate system. The outputs of the line generator are fed into a depth-buffer memory 10 which stores coordinate data representing the depth of each pixel in order to execute a hidden-surface process of a graphic image on the basis of the X-, Y-, and Z-data supplied from the line generator. X- and Y-coordinate data from the line generator and the Z-coordinate data from the depth-buffer memory 10 are input to a frame buffer memory 11 which stores display information to be used to display the graphic image on the basis of the data feed from the line generator and the depth-buffer memory 10. The output of the frame buffer memory 11 is delivered to a cathode ray tube (CRT) 12 to visualize the three-dimensional scene.

Since the depth-buffer algorithm needs a depth-buffer memory with a large capacity of storage, a dynamic random access memory (DRAM) is usually used because DRAMs are relatively cheap although they are disadvantageous in that they have slow access speed. Further, the depth-buffer memory operates such in a hidden-surface process as to read out depth information (Z-coordinate data) to cause the read information to be compared with the latest depth information and depth information to be updated. Consequently, the depth-buffer memory is required to execute a READ-WRITE cycle and thus is slow in operating speed in comparison with the line generator and a frame buffer memory operating in synchronism with the depth-buffer memory, resulting in difficulty in achieving higher hidden-surface processing speed in a conventional three-dimensional graphic display system.

A first prior art approach addressing to the inherent memory bandwidth problem through the Z-Buffer bottleneck is a work disclosed in an article by G. Knittel and A. Schilling, University of Tübingen, Germany, which is related to the MONOGRAPH project, supported by the European CEC's ESPRIT programme. The authors present a new memory design which integrates the required compare logic into the Z-Buffer memory devices, and performs the complete Z-Buffer algorithm on chip. In this way, the enormous internal bandwidth is available, and the read-modify-write cycles are turned into merely write cycles from an external point of view.

A second approach concerning this type of hidden-surface process is disclosed in Japanese Patent Public Disclosure No. 42279/1987, published on February 24, 1987 which proposes a method of depth information comparison with an increased efficiency. According to that prior art, in the depth information comparison process, it is necessary to update a Z-Value on the basis of an AND condition. Such a process is complicated and not suited for a hidden-surface process in a depth-buffer algorithm.

Beyond the above approaches, another approach addressed to that problem is disclosed in European Patent Application 0 500 035. A three-dimensional graphic display system is provided where the aforementioned algorithm is modified insofar as READ-WRITE cycles are performed in a depth buffer memory only when patterns are actually overlapped and when Z coordinate data have to be compared with one another. When there is no necessity of comparison between z coordinate data, only WRITE cycles are performed in the depth-buffer memory, thereby speeding up a hidden-surface process executed in a three-dimensional graphic display system.

The rendering of three-dimensional graphic images on a two-dimensional raster scan display screen conventionally involves the use of a frame buffer to store the final image. The information in the frame buffer is the end product of numerous data manipulations involving the generation of three-dimensional objects by a processor, depth comparisons referenced to a Z-Buffer being used to render into the frame buffer only the objects or portions thereof which are visible. The frame buffer memory is a special purpose type of memory in which the memory locations correspond to locations, or pixels, on a monitor, or other type of display. Prior art graphics systems do not provide for efficient use of a main memory, as information between the main memory and the frame buffer memory must be transferred via one system bus, under control of a central processing unit (CPU). Therefore, some known computer graphics systems have a CPU cache memory which contains the information in memory locations most frequently accessed by the CPU.

A typical cache memory system consists of cache random access memory (RAM), a cache controller, and a tag store. The tag store is a table of the main memory addresses of the information that is stored in the cache RAM. The cache RAM stores the information that is operated on by the CPU. The cache controller controls the information that passes in and out of the cache RAM, and updates the cache tag store. The specific structure of the cache tag store and of its entries are dependent on whether a cache is a direct mapped cache or a set associative cache, or a fully associative cache. One characteristic of all cache tag stores, however, is that they need a method for indicating the main memory addresses corresponding to the entries in the cache memory. When the CPU needs the information in a main memory address, first the tag store is surged for the main memory address. If the main memory address is in the tag store (a cache "hit"), the information is retrieved from the cache RAM and sent to the CPU. If the main memory address is not in the tag store (a cache "miss"), the cache controller retrieves the information from the main memory, stores it in the cache RAM, and records the main memory address in the tag store. When the CPU stores the information, it sends the information back to the cache controller which stores the information in the cache RAM. If the cache is a "write through" cache, the information is also written to the corresponding address in the main memory. If the cache is a "write back" cache, the information is not written to the corresponding address in the main memory until a later time.

In another prior art approach disclosed in the International Patent Application WO95/24682, a semiconductor chip in a computer graphics system is provided to perform texture mapping. Hereby a cache memory is used to accelerate the reading and writing of texels. In texture mapping, a pattern image or texture map is combined with an area or surface of an object to produce a modified object with the added detail of the texture map. As the surface of an object is rendered, the respective two-dimensional index data necessary for associating a two-dimensional information into an array of texture pixels are interpolated and used to look-up a texture value for each rendered pixel. The subject matter of that application addresses the need of those computer graphics systems for a fast, accurate and efficient texture mapping process. Hereby the texture maps are stored in a main memory. It is particularly proposed that the data for recent texture maps are cached in order to accelerate the reading and writing of texels. When a DRAM row is accessed, its contents can be transferred to the cache while simultaneously accessing the cache and cycling the DRAM array again. Herethrough the memory access cycles can be performed in parallel due to reading from the cache. Further a graphics subsystem is provided for processing object data into a screen coordinate system. The subsystem generates pixel data based on primitives (e.g. points, lines, polygons, and meshes) from the subsystem. The pixel data is sent to a further subsystem, where upon Z-Buffering, blending, texturing, and antializing functions are performed. The resulting pixel values are stored in a frame buffer. The cache memory coupled to the main memory is used for storing recently used texture data.

A further cache approach is disclosed in the International Patent Application WO95/16960 where a method and a system for caching graphic information for a display in a graphics processing system is proposed in order to avoid repeated rendering each time a graphic is required to be redrawn. The subject matter of that application is particularly concerned with the problem that a developer of an application program can specify which graphic objects should be cached, and request that the caching be carried out for those graphics. The proposed caching system is performed explicitly at the request of a developer. The application is further concerned with the objective that a cached graphic must be stored in a device dependent manner so that the cached image can be transferred directly to the respective device with little or no interpretation such as scaling, bit-depth translation, colour look-up, etc.

The known prior art approaches, in particularly the cache approaches, are not sufficient for application for the pre-described Z-Buffer algorithm, which is usually implemented in 3D hardware accelerators for visible surface determination. Thereupon, performance and cost of visible surface determination is one of the key problems in 3D graphics.

It is therefore an object of the present invention to improve the Z-Buffer algorithm in hardware by a specific hardware unit which particularly can be implemented on a 3D rasterizer chip in order to enhance performance without the drawback of costs.

According to the present invention the Z-Buffer algorithm is improved by a method of caching depth information which can be implemented in hardware by a specific depth cache memory ("Z-Cache"). The use of a Z-Cache increases the performance of Z-Buffering significantly while reducing overall graphics subsystem cost by removing the dedicated Z-Buffer from the graphics board and using the system memory (e.g. of a 3D rasterizer chip) to store Z-Values (depth information per pixel) instead.

The invention shows the efficient use of an on-chip depth cache which incorporates the known Z-Buffer algorithm. The proposed cache structure has the following major advantages over existing Z-Buffer algorithm implementations. Z-Buffer access is speeded-up by burst read and write of depth values from the Z-Buffer to the Z-Cache and vice versa. A fast access time to Z-values already stored in the Z-Cache is achieved. Further the overall execution time of the Z-Buffer algorithm is significantly improved with respect to the implementation of a one cycle read/compare/write operation to Z-values in case of a cache "hit". Beyond this the overall 3D graphics subsystem cost is reduced because the dedicated Z-Buffer is replaced by a pseudo Z-Buffer which is mapped into the system memory. If no 3D graphics application is running on the computer, the pseudo Z-Buffer resource can be shared by any other application.

It is emphasized that the underlying concepts of the present invention can be applied either to visible surface determination, or to texture mapping, colour blending, fogging, and glassy effects, respectively. It is further not restricted to display devices with line scan oriented image generation, but is also applicable to display devices with e.g. circular line oriented geometry. In case of texture mapping, the use of small textures which are replicated during mapping process is a common case. Storing small textures in an on-chip cache allows to speed up the mapping process.

In case of colour blending (for example, fogging, transparency or anti-aliasing), specific pixels have to be reloaded many times until the final colour is determined. Storing intermediate results of the pixels to be blended in the on-chip cache speeds up the blending process.

In the following preferred embodiments of the invention are described in more detail with reference to the accompanying drawings in which
- Fig. 1: is a perspective view of a projection of a 3D object onto a pixel-oriented screen;
- Fig. 2: shows the necessary steps for an approximation of the surface of a cylindric object by a number of triangles (primitives);
- Fig. 3: is an overview block diagram of a 3D graphics hardware according to the prior art;
- Fig. 4: is a block diagram depicting an entire structure of a conventional 3D graphic display apparatus;
- Fig. 5a: is a representation of primitives (triangles) in a frame buffer (color value) and a Z-Buffer (Z-coordinate);
- Fig. 5b: shows an application of the Z-Buffer algorithm to the primitives of Fig. 5a where overlaying the triangles with respect to their Z-coordinate;
- Fig. 6: is a block diagram of a rasterizer unit which comprises a Z-Cache according to the invention;
- Fig. 7: is a state diagram of the Z-Cache of the invention;
- Fig. 8: is a block diagram of an exemplary hardware implementation of the Z-Cache of the invention; and
- Fig. 9-15: are timing charts illustrating the functionality of the Z-Cache at different states.

The Z-Cache according to the invention can be implemented in a common rasterizer component of a 3D graphics system. Those components are intended to speed up the 3D rendering process in PCI-bus based graphics subsystems.

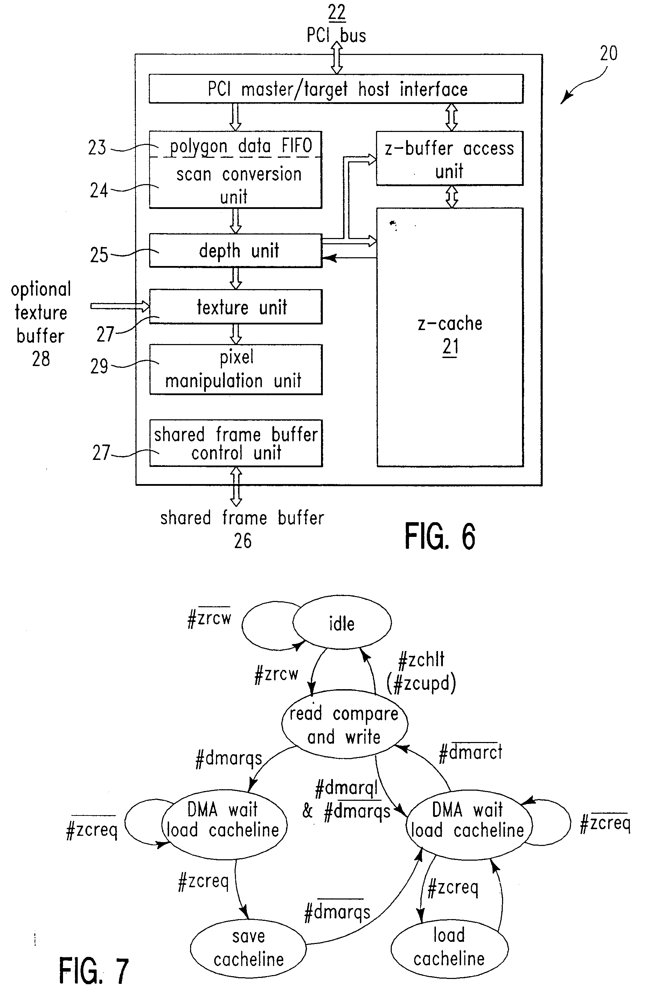

Figure 6 shows a schematic block diagram of a hardware rasterizer component 20 which has implemented a Z-Cache structure 21 according to the present invention. The rasterizer 20 receives triangle data over a PCI-bus 22 from a CPU which is responsible for geometry and setup calculation of the triangles. A data FIFO 23 buffers incoming triangles and takes care of a continuous pixel flow through the rendering pipeline. After scan converting the triangle data into pixel data by means of a scan conversion unit 24, a depth unit 25 generates an address to a Z-Buffer (not shown) in order to compare the depth value of a current pixel with the depth value of the pixel at the same display position in a frame buffer 26.

If the depth value of the pixel in the frame buffer 26 is already stored in the Z-Cache 21, a "cache-hit" occurs. In this case the depth value of the current pixel is compared with the respective depth value stored in the Z-Cache 21.

If there is a "cache-miss" on the current pixel position, it is required to copy the according line from the Z-Buffer memory into the Z-Cache 21 prior to the comparison. Depending on the comparison result, the depth (Z-) value in the Z-Cache 21 will be replaced by the new Z-value ("z-new") belonging to the pixel currently processed in the rendering pipeline. If the current pixel has been determined as visible by replacing the old Z-value with the new one, the rendering pipeline proceeds with further modifications on the color of the current pixel, by texture mapping or blending. The latter functions can be performed by an optional texture unit 27, which is connected to a respective optional texture buffer 28, and a pixel manipulation unit 29. Finally the current pixel is written to the frame buffer 26.

In contrast to common CPU cache memories (L1 cache, L2 cache etc.), the Z-Cache 21 is not transparent to the execution unit (processor), u.e. the rendering pipeline. In addition to the traditional functions of a cache, like storing addresses and data and controlling DMA access to the system memory, the Z-Cache requires to compare the applied data from the depth unit 25 of the rendering pipeline (z-new) with the existing data (z-old) in the Z-Cache 21 and probably replace z-old by z-new dependent on the comparison, i.e. determining which pixel is closer to the viewpoint. Thus the Z-Cache 21 is regarded as a write-only cache which only signals if the write was successful or if the existing z-old value remains in the Z-Cache.

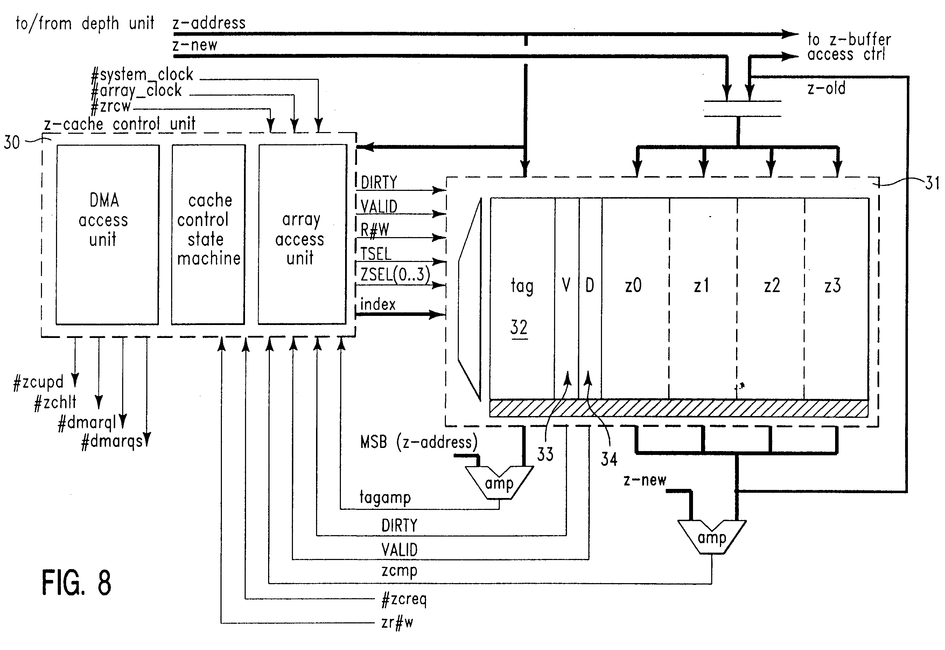

Figure 7 illustrates the respective state diagram of the Z-Cache control unit (shown in Fig. 8 in more detail). As long as there is no request from the depth unit of the rendering pipeline for a z-compare ("#zrcw = z-read-compare-write"), the Z-Cache remains in an idle state. If a request comes up ("#zrcw"), the Z-Cache executes a read/compare/write cycle. In case of a cache-hit, the Z-Cache activates a "#zchit" signal in the same cycle.In case of z-new<z-old, z-new replaces z-old which is indicated by "#zcupd" to the depth unit. In case of a cache-miss, it is required to load a new cache line from the Z-Buffer in the system memory. A cache-miss can be caused by an invalid cache line which is indicated by a VALID bit, or a tag mismatch with the most significant bits of the address of the current pixel.
Depending on the coherency state which is indicated by a DIRTY bit, the current cache line has to be written back to the Z-Buffer ("#dmarqs") prior to the load of a new line ("#dmarql"). The Z-Buffer access unit recognizes the DMA request and takes over control of the Z-Cache, while trying to get master access over the PCI-bus. As long as the PCI-bus is not yet granted to the rasterizer, the Z-Cache is in a wait state and the rendering pipeline is stalled. During a burst load by activating "#zcreq" and "zcr'w" low, the Z-Cache compares on the fly z-new with the respective incoming z-old in the cache line currently loaded and executes the Z-Buffer algorithm as described above. By activating "#zchit" and "#zcupd", depending on the Z-Buffer algorithm result, the Z-Cache returns to the idle state.

Figure 8 gives an overview to the implementation of the Z-Cache. The Z-Cache is mainly divided into two units, a Z-Cache controller unit 30 and a Z-Cache array unit 31. The array unit 31 can store 1024 depth values of 24 bit each, organized in 256 cache lines, i.e. four depth values per line. In addition, a tag array 32 stores the most significant bit of the Z-Buffer address, a VALID bit 33 indicating validation of the z-values in that cache line, and a DIRTY bit 34 indicating if the cache line is incoherent with the Z-Buffer, i.e. the rendering unit did update at least one of the depth values in the cache line. The number of bits required for the tag 32 depends on the physical or logical addressing scheme in the Z-Cache. For example, the size of the Z-Cache can be tuned to a 1024x768 display resolution, logically addressed, but can also support 1280x1024 display resolution which requires at least 4 Mbyte of addressable depth buffer memory space. Thus the tag entry results in 12 bit.

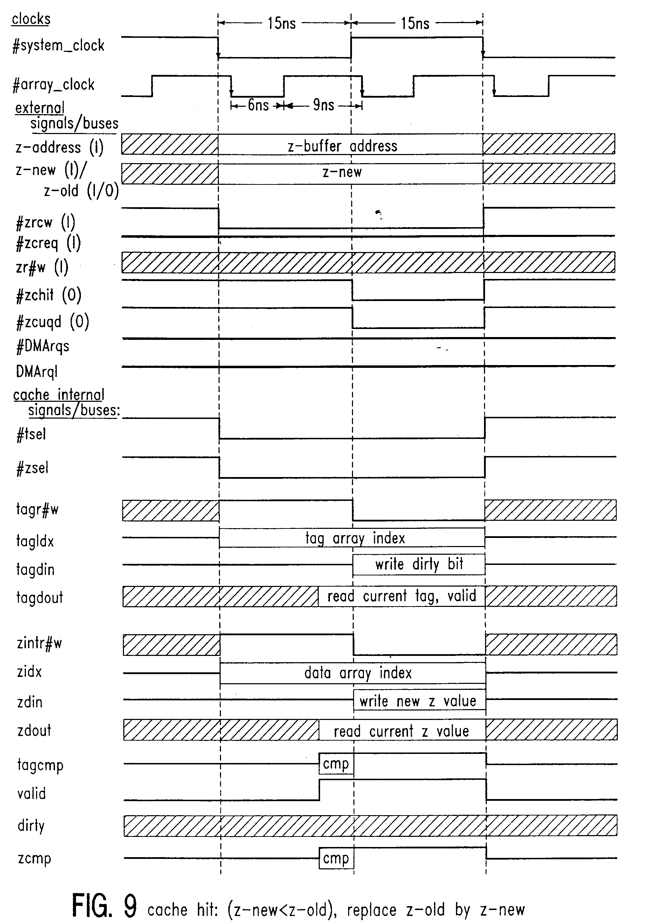

The Z-Cache controller unit 30 mainly controls the Z-Buffer algorithm and the respective access to the cache and loading and storing of cache lines by DMA access to the Z-Buffer in the system memory. The timing charts in Figures 9-15 give detailed examples of the following Z-Cache accesses.

### Definition of the signal lines shown in Fig. 9-15 are as following:

### Z-cache macro interface signals:

- **#system_clock**: clock pulse for the internal rasterizer clock, i.e. clocking the rasterizers pipeline
- **#array_clock**: clock pulse to trigger the cache array (derived from the #system_clock), with a fixed phase relation to the #system_clock
- **z-address (I)**: address bus carrying the memory of the z-value (input to the z-cache macro)
- **z-new(i)/z-old(I/O)**: data bus carrying the z-value (input:z-new of current pixel, input/output:z-old during load and store operation from/to the external z-buffer)
- **#zrcw(I)**: control signal to trigger a read-compare-write function within the z-cache macro
- **#zreq(I)**: control signal to trigger the z-cache for load/store from external z-buffer
- **#z#w(I)**: control signal to indicate read or write access to the z-cache during load/store from external z-buffer
- **#zchlt(O)**: status signal to indicate cache hit to the rasterizer
- **#zcupd(O)**: status signal to indicate successful compare of z-new < z-old whereby z-old will be replace with z-new
- **#DMArqus**: status signal indicating a DMA request with store current cache line to the external z-buffer
- **#DMArql**: status signal indicating a DMA request with load a new cache line from external z-buffer

### Some z-cache macro internal signals

- **#tsel**: z-cache internal control signal triggering access to the tag-array
- **#zsel**: z-cache internal control signal triggering access to the data array(s)
- **tagr#w**: z-cache internal signal triggering read or write access to the tag array
- **tagidx**: cache array address, which is the index part of the external z-address
- **tagdin**: cache tag data to be written into the tag array, including valid and dirty bit
- **tagdout**: cache tag data out from tag array, including valid and dirty bit
- **zintr#w**: z-cache internal control signal triggering read or write access to the data array
- **zidx**: cache array address, which is the index part of the external z-address
- **zdin**: z-value to be written into the data array
- **zdout**: z-value read from data array
- **tagcmp**: result: cache tag entry compared with tag-part of current z-address (verification of a cache hit)
- **valid**: status of the current cacheline currently accessed with respect to validation
- **dirty**: status of the current cacheline currently accessed with respect to data consistency
- **zcmp**: result: cache data entry compared with applied z-value (verification of data replacement at current cache data position

Fig. 9 shows a cache hit (indicated by #zchit low), whereby the applied z-value (z-new) replaces the existing z-value (z-old) in the accessed cacheline (indicated by #zcupd low).

In the first half of the #system-clock the cache index is applied (derived from z-address) and the tag-entry, valid bit, dirty bit and the cache line entry is read. Also the valid bit is checked (valid high, the tag is compared with the applied address (match:tagcmp high), z-old is selected form the cacheline and compared with the applied z-new (z-new < z-old; zcmp high). In the second half of the #system clock the dirty bit in the tag-entry and z-new is written to the current cache line.

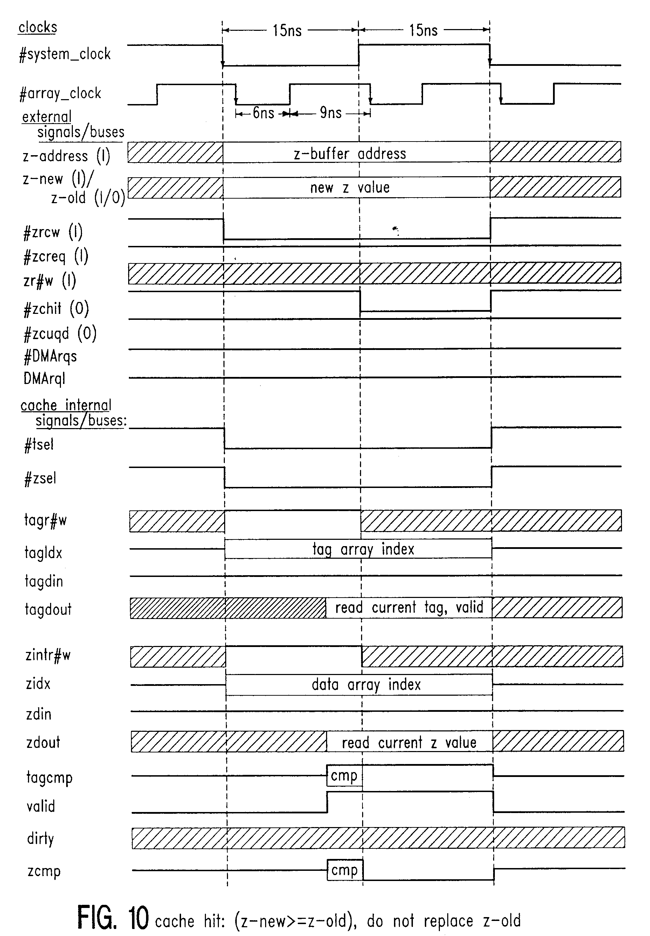

In Fig. 10 also a cache hit is shown, but the cacheline will not be updated with z-new (#zcupd remains high), because z-new is greater or equal than the existing z-old stored in cache (#zcupd remains high)

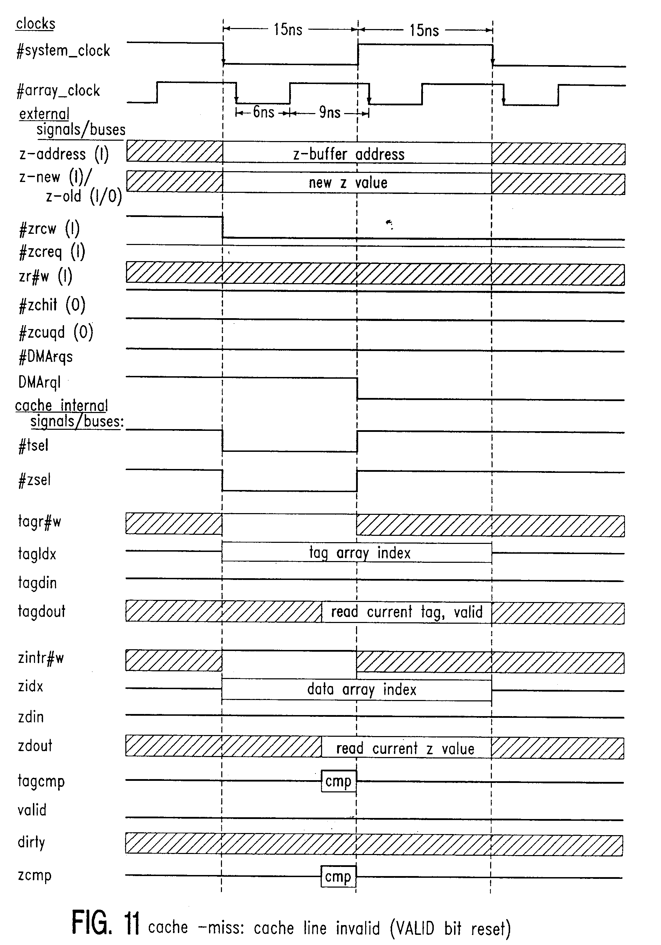

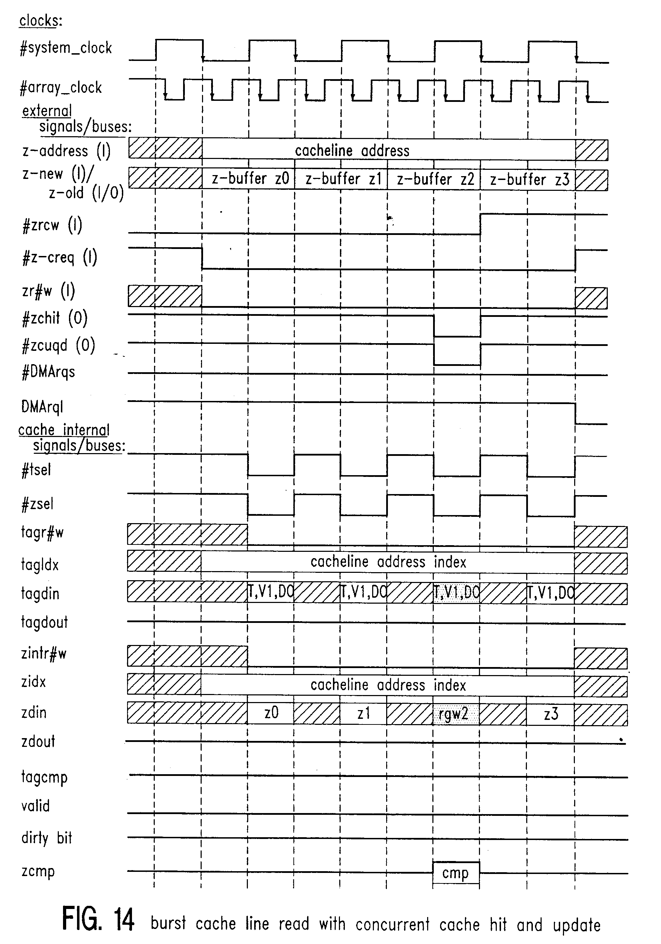

Fig. 11 shows a cache line miss, because the current cache line entry is invalid (valid remains low after reading out the tag entry). Thus the rasterizer requires to load a new cache line from the external z-buffer (indicated by #DMArql going low). The z-cache module is in idle state until a new cache line is available and the applied z-new can be compared with z-old loaded from the external z-buffer (see Fig. 14).

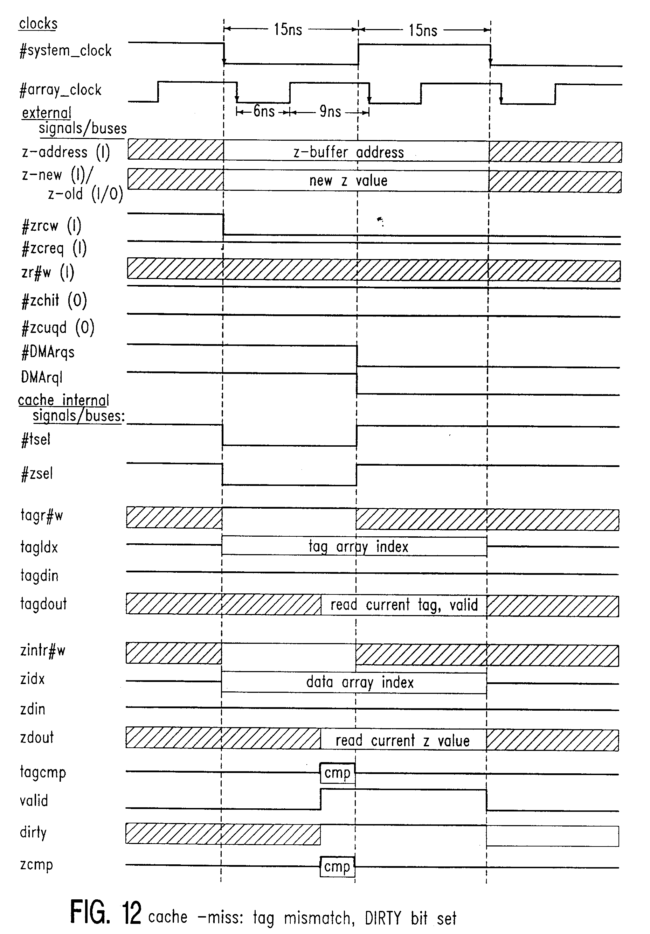

Fig. 12 shows a cache line miss with a valid line entry (valid high), but mismatch of tag entry with the applied address of z-new (tagcmp low). Because the cache line is inconsistent with the external z-buffer memory (dirty high), the current line has to be written back to the z-buffer (#DMArqs low), before a new cache line is loaded from the external z-buffer (#DMArql low).

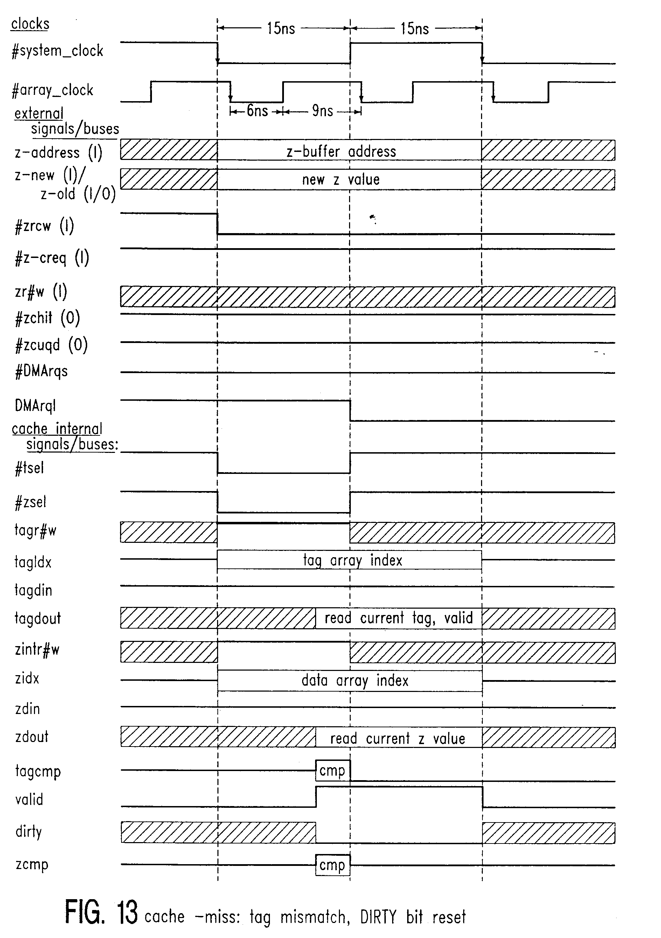

Fig. 13 differ form Fig.12 in the case, that the cache is consistent with the z-buffer (dirty low), and the cache miss situation does not require to store the current cache line (#DMArqs high), before reading a new line from z-buffer (#DMArqul low).

Fig. 14 shows a burst read access to the external z-buffer in the case of a cache miss. #zcreq low indicates to the z-cache to read burst data from external. The cache line will be written to the z-cache (zr#w low), whereby z-new will be compared with z-old 'on the fly'. Depending on the comparison result z-new or z-old will be written to the cache and the dirty bit will be set or not. In Fig. 14 is z-new<z-old, therefore z-new instead of z-old is written to the cache (#zcupd low ). Operation of the rasterizer proceeds after indication of the 'pseudo' cache hit (#zchit low). Upgoing #DMArql indicates the end of the burst read from z-buffer.

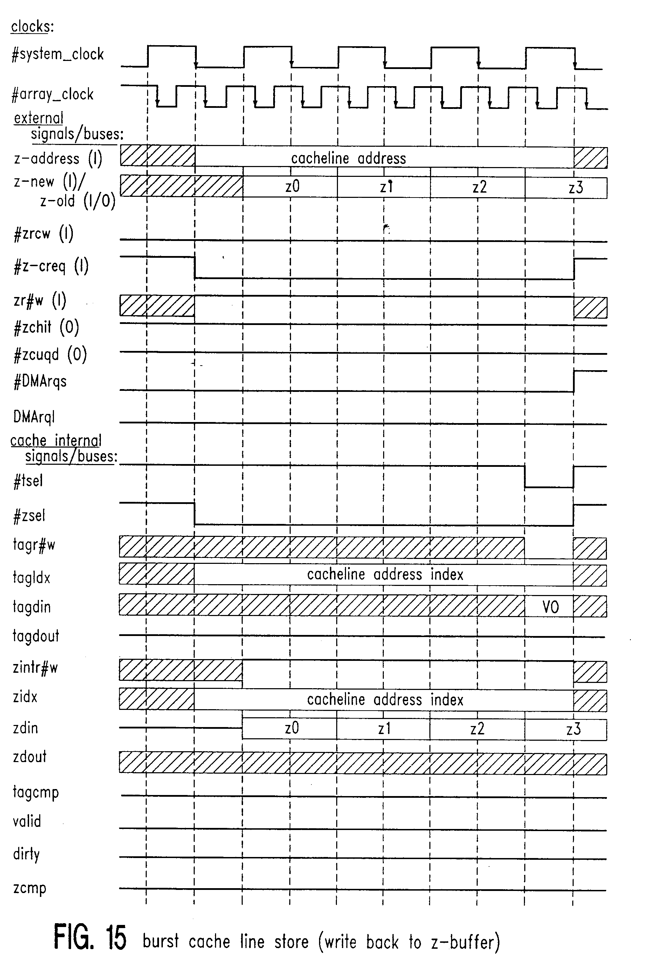

Fig. 15 shows a burst write back to the external z-buffer in case of inconsistency of a cacheline with the according z-buffer entry (dirty high), if the current cache-line has to be replaced with a new line. The last cycle of the store operation resets the valid bit of the tag entry in order to invalidate the cache line. #DMArqs going high indicates the end of the store operation.

## Claims

1. Method of visible surface determination in a graphics system for mapping 3D-graphics information onto a 2D-presentation space, where depth information is provided by a depth buffer algorithm,
the method being characterized by the steps of
storing most recently used depth information in a depth cache memory,
comparing actual depth information with depth information previously stored in said depth cache memory with respect to said depth buffer algorithm, and
replacing said previously stored depth information by said actual depth information dependent on the result of said comparison.

2. Method according to claim 1, wherein performing a one cycle read/compare/write operation when a depth information has been previously stored in the depth cache memory.

3. Graphic system for visible surface determination of 3D-graphics having n-bit depth information for each graphical element, said visible surface determination being performed by a depth buffer algorithm, said graphic system comprising
means for storing attribute information of said graphical elements;
means for storing depth information of said graphical elements with respect to said depth buffer algorithm;
wherein said graphic system is characterized by
depth cache means for storing most recently used depth information and for performing said depth buffer algorithm.

4. System according to claim 3, where said depth cache means is a write-only cache memory which only signals, if a write operation is successful, or if a previously stored depth information remains in the depth cache means.

5. System according to claim 3, where said depth cache means is a burst read and write cache memory.

6. System according to any of claims 3 to 5, where said depth cache means is mapped into a system memory.

7. System according to any of claims 3 to 6, where said depth cache means comprises
control means for controlling said depth cache means with respect to said depth buffer algorithm and for controlling the according access to said depth cache means and the loading and storing of depth information to said means for storing the depth information;
array means for storing actual graphical element information.

8. System according to claim 7, where said array means further comprises
tag array means for storing most significant bits of the address of said means for storing the depth information;
first indicator means for indicating validation of the depth values in a respective depth cache memory line;
second indicator means for indicating if a depth cache memory line is incoherent with the respective line stored in said means for storing the depth information.

9. Cache structure for implementing a depth-buffer algorithm for visible surface determination in a 3D-graphics system.

10. Cache structure according to claim 9, comprising a one cycle read/compare/write operation to depth values.

11. Cache structure according to claim 9 or 10, comprising
means for comparing applied depth values with existing depth values;
means for replacing existing depth values by applied depth values dependent on said comparison.

12. Cache structure according to any of claims 9 to 11, being mapped into the system memory.

13. Use of the method according to claims 1 and 2, the system according to claims 3 to 8, or the cache structure according to claims 9 to 12, for texture mapping or colour blending in a 3D-graphics system.
